# EUROPEAN PATENT SPECIFICATION

(11) **EP 1 251 141 B1**
(45) Date of publication and mention of the grant of the patent: **19.10.2005**
(21) Application number: 02016309.3
(22) Date of filing: 27.04.1990
(51) Int. Cl.: C08F 4/654, C08F 4/647, C08F 4/646, C08F 10/00

(54) **Process for the polymerization of olefins**
Verfahren zur Polymerisation von Olefinen
Procédé de polymérisation d'oléfines

(30) Priority: 28.04.1989 IT 2032989
(43) Date of publication of application: 23.10.2002
(62) Divisional of application: 97107180.8
(73) Proprietor: Basell Poliolefine Italia S.r.l., 20124 Milano (IT)
(72) Inventor: Sacchetti, Mario, 44100 Ferrara (IT); Govoni, Gabriele, 44100 Renazzo, Ferrara (IT); Ciarrocchi, Antonio, 44100 Ferrara (IT)
(74) Representative: Gaverini, Gaetano Luigi Attilio

(56) References cited:
- EP-A- 0 065 700
- US-A- 4 399 054

## Description

This invention refers to a process for the polymerization of olefins carried out in the presence of a catalyst comprising the product of the reaction of an Al-trialkyl compound and a catalyst component comprising a titanium compound supported on magnesium chloride. Olefins such as ethylene, propylene and their mixtures can be polymerised.

Catalysts for the polymerization of olefins comprising a titanium halide supported on anhydrous magnesium halides in active form are described extensively in patent literature.

Patent literature has become abundant since the use of magnesium halides in active form as supports for Ziegler-Natta catalyst components was described for the first time in USA patents n. 4,298,718 and 4,495,338.

The most active forms of the magnesium halides are characterized by X-ray spectra where the maximum intensity reflection which appears in the spectrum of the nonactive halides is no longer present, but is substituted by a halo with the maximum intensity shifted towards the lower angles with respect to the one of the maximum intensity reflection in the nonactive halide.

In the less active forms of the magnesium chloride the maximum intensity reflection which appears at 2.56 Å (2 = ϑ 35°) is no longer present, but is substituted by a halo with a maximum intensity between the angles 2 ϑ of 33.5° and 35°; a reflection at 2 ϑ of 14.95° is always present.

The introduction in industrial practice of catalysts supported on magnesium chloride made possible significant simplifications to the polyolefin production processes. In particular, the possibility of obtaining catalysts in the form of spherical particles capable of producing polymers which duplicate the form of the catalyst, have satisfactory morphological characteristics (flowability and bulk density), and do not require granulation which, as is well known, is expensive in terms of energy use.

Examples of catalysts with controlled particle size are described in USP 3,953,414.

The polymer (polyethylene) which can be obtained with said catalysts has good morphological characteristics; the polymer productivity of these catalysts, however, is not very high (generally between 2,000 and 15,000 g/g catalyst). When the polymer yield rises to values higher than 20,000 g/g catalyst, the polymer particles formed are fragile and the apparent density is very low.

The catalyst components described in the above mentioned US patent are obtained from an MgCl₂.6H₂O adduct spherulized in an apparatus of the dry cooling type, and then reacted with TiCl₄.

USP 4,399,054 describes catalyst components for the polymerization of olefins capable of producing polymer (polypropylene) with good flowability and bulk density characteristics. The polymer productivity of the catalyst is not very high (between 3,000 and 9,000 g/g catalyst; polymerization in heptane at 70°C for 4 h with partial propylene pressure of 7 atm.).

The catalyst components are obtained from MgCl₂ adducts with alcohols, in the form of spherical particles containing generally 3 moles of alcohol.

Before the reaction with TiCl₄ the alcohol content is lowered to 2.5-2 moles in order to render the catalysts suitable to obtain non-fragile spherical form polymers. The alcohol content is never lowered below the 2 moles (this reduces drastically the activity of the catalyst).

In the case of magnesium chloride, at least in the less active forms (those where in the spectrum are present two halos with intensity peaks respectively between 2 ϑ angles from 30.45° to 31°, and from 33.5° to 35°), the reflection that in the nonactive magnesium chloride spectrum appears at 2 ϑ of 14.95° is still present.

Catalyst components, for the polymerization of CH₂=CHR olefins, where R is hydrogen or an alkyl or aryl radical with 1-8 carbon atoms have now been found, suitable to obtain catalysts capable of producing polymers in the form of sperical particles with optimum morphological characteristics (flowability and high bulk density). Moreover, the catalysts have a significant catalytic activity and stereospecifity.

Therefore the object of the present invention is a process for the polymerization of olefins carried out in the presence of a catalyst comprising the product of the reaction of an Al-trialkyl compound and a catalyst component comprising a titanium compound containing at least one Ti-halogen link supported on anhydrous magnesium chloride, said component being in the form of spherical particles with an average diameter between 10 and 350 µm, surface area between 20 and 250 m²/g, porosity greater than 0.2 cc/g, having an X-ray spectrum where a) reflections at angle 2 ϑ of 35° and 2 ϑ of 14.95° are present, or b) where the reflection at 2 ϑ angle of 35° is no longer present but is substituted by a halo with a maximum intensity between angles 2 ϑ of 33.5° and 35°, and the reflection at angle 2 ϑ of 14.95° is not present. In a specific embodiment of the process the catalyst component may further comprise an electron-donor compound. In a further specific embodiment of the process an electron-donor compound (external donor) is used in the preparation of the catalyst. In a more specific embodiment of the process the catalyst component includes an electron-donor selected among alkyl, cycloalkyl and aryl esters of phthalic acid, and the external donor is selected among silicon compounds of the formula R₁R₂Si(OR)₂, where R₁ and R₂ equal or different are alkyl, cycloalkyl or aryl radicals with 1-18 carbon atoms, and R is an alkyl radical with 1-4 carbon atoms.

In a further specific embodiment of the process the external donor is selected among 1,3-diethers of the formula 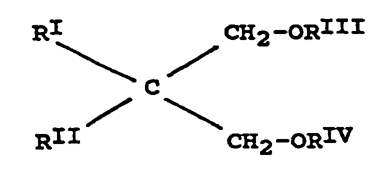 where R^{I}, R^{II}, same or different from each other, are alkyl, cycloalkyl or aryl radicals with 1-18 carbon atoms; and R^{III} and R^{IV}, same or different, are alkyl radicals with 1-4 carbon atoms.

For the definition of the X-ray spectrum of magnesium chloride, reference is made to the standard ASTM D-3854. The registration of the spectrum is done using a copper anti-cathode and K α radiation.

The spectrum with the a) characteristic is peculiar of the catalytic components with surface area smaller than 100 m²/g and porosity greater than 0.44 cc/g, especially with surface area smaller than 70-80 m²/g and porosity greater than 0.4 cc/g. The spectrum with the b) characteristic is given by components with an area greater than 60 m²/g and porosity between 0.2 and 0.4 cc/g, especially between 0.25 and 0.4 cc/g.

The pore volume distribution is such that at least or more than 50% of the pores have a radius greater than 100 Å. In the components with area smaller than 100 m²/g, more than 70% of the pores have a radius greater than 100 Å.

As already indicated, the catalyst components used in the process of the invention supply catalysts suitable for the production of olefins (co)polymers in the form of spherical particles with valued morphologic characteristics (high bulk density values, flowability, and mechanical resistance). The average diameter of the polymeric particles is between 50 and 5000 µm.

In particular, catalysts obtained from components with surface area smaller than 100 m²/g and a porosity greater than 0.4 cc/g, are appropriately used in the preparation of ethylene polymers (HDPE and LLDPE). The catalysts have a very high activity and the spherical polymer obtained has attractive morphological characteristics (very high bulk density, flowability and mechanical resistance).

The catalysts obtained from components with surface area greater than 60-70 m²/g and porosity smaller than 0.4 cc/g are preferred for use in preparing crystalline propylene homo and copolymers, the so called impact copolymers obtained with sequential polymerization of 1) propylene, and 2) ethylene-propylene mixtures.

They are also advantageously used in the preparation of ethylene-propylene rubbers (EP rubbers), or ethylene-propylene-diene rubbers (EPDM rubbers), and of propylene polymer compositions which contain said rubbers.

It is surprising that with the catalysts used in the process of this invention said types of rubber in spherical particles with good flowability and bulk density characteristics can be obtained, because up to now it has not been possible to prepare elastomeric polymers of the above indicated type in flowable granular particles due to the insurmountable problems of the fouling of the reactors and/or the agglomeration of the particles.

It is also surprising that the catalysts used in the process of the invention are highly active although the magnesium chloride in them gives X-ray spectra characteristic of the low active forms of the magnesium chloride itself.

Finally it is surprising and completely unexpected that the magnesium chloride is present in the crystalline form with an X-ray spectrum as the one indicated in b).

The preparation of the catalyst components is carried out in a variety of ways. The preferred method comprises the reaction of a magnesium chloride/alcohol adduct containing alcohol moles in such a number that the adduct is solid at room temperature, but melted at temperatures between 100-130°C and with a titanium compound containing at least one halogen-titantium bond.

The number of alcohol moles vary with the different types of alcohol.

The alcohols suitable for use have the ROH formula where R is an alkyl, cycloalkyl, or aryl radical with 1-12 carbon atoms. It is also possible to use mixtures of said alcohols.

Examples of alcohols are methanol, ethanol, propanol, butanol, 2-ethylhexanol and their mixtures.

With alcohols such as ethanol, propanol, and butanol, the number of moles is about 3 per MgCl₂ moles. The alcohol and the magnesium chloride are mixed in an inert hydrocarbon liquid immiscible with the adduct, brought to the fusion temperature of the adduct. The mixture undergoes vigorous stirring [using for example an ULTRA TURRAX T-45N apparatus rotating at 2000-5000 RPM (Jonke & Kunkel K.G.IKG Werkel)].

The emulsion obtained is cooled in a very short time. This causes the solidification of the adduct in the form of spherical particles with the desired dimensions. The particles are dried and then subjected to a partial dealcoholation by heating it to temperatures going from 50° to 130°C.

The partially dealcoholated adduct is in the form of sperical particles with an average diameter between 50 and 350 µm , a surface area between 10 and 50 m²/g and porosity from 0.6 to 2 cc/g (determined with a mercury porosimeter).

The higher the degree of dealcoholation, the higher the porosity. The pore volume distribution is such that more than 50% of the pores have a radius greater than 10,000 Å.

The dealcoholation is carried out until the alcohol contents are not greater than 2 moles per MgCl₂ mole, preferably comprised between 0.15 and 1.5 moles, particularly between 0.3 and 1.5 moles.
A specific embodiment is a MgCl₂/ROH alcohol adduct, where R is an alkyl, cycloalkyl or alkylaryl radical with 1-12 carbon atoms, suitable for the preparation of the catalyst component used in the process of the invention containing from 0.2 to 2 moles of alcohol per mole of MgCl₂, and having a surface area between 10 and 50 m²/g, porosity (mercury) from 0.6 to 2.5 cc/g and pore volume distribution such that at least 50% of the pores have a radius greater than 10,000 Å.

Whenever the dealcoholation is brought to values lower than 0.2 alcohol moles per MgCl₂ mole, the catalytic activity is considerably reduced.

The partially dealcoholated adduct is then suspended in cold TiCl₄ at a concentration of 40-50 g/l, and then brought to a temperature of 80°-135°C and maintained at said temperature for 0.5-2 hrs. The excess TiCl₄ is separated hot via filtration or sedimentation.

The treatment with TiCl₄ is repeated one or more times if the alcohol content desired should be very low (generally less than 0.5% by weight).

During the preparation of a catalytic component containing an electron-donor compound, the latter is added to the TiCl₄ in quantities equal to molar ratios with respect to MgCl₂ between 1:6 and 1:16.

After the treatment with TiCl₄, the solid is washed with a hydrocarbon (e.g. hexane or heptane) and then dried.

According to another method, the melted adduct while in emulsion in an inert hydrocarbon is passed through a tube of the proper length under turbulent motion and then gathered in an inert hydrocarbon maintained at low temperature. Said method is described in USP n. 4,399,054 to which we make reference for the description. In this case as well the particles of the adduct are subjected to partial dealcoholization and reaction with TiCl₄.

As a variant to the methods described above the titanium compound, especially when it is solid at room temperature such as for instance the TiCl₃, is dissolved in the melted adduct which is then dealcoholated as indicated above and subjected to a reaction with a halogenating agent capable of reacting and separating the hydroxylic groups, such as for instance SiCl₄.

In the starting melted adduct, besides the titanium compound and optionally other transition metals, also co-supports such as AlCl₃, AlBr₃, ZnCl₂ may be included.

The titanium compounds suitable for the preparation of catalyst components, besides TiCl₄ and TiCl₃ and similar halides, also include other compounds with at least one Ti-halogen link, such as halogen alcoholates like trichlorophenoxytitanium and trichlorobutoxytitanium TiCl₄ is preferred.

Finally the titanium compound can be used in mixtures with other transition metal compounds, such as V, Zr and Hf halides and halogen alcoholates.

As already indicated, the catalyst component may also contain an electron-donor compound (internal donor). This is necessary when the catalyst component must be used in the stereoregular polymerization of olefins such as propylene, 1-butene and 4-methyl-1-pentene.

The electron-donor compounds can be selected among compounds including ethers, esters, amines, ketons.

Preferred compounds are the alkyl esters, cycloalkyls and aryls of polycarboxyl acids, such as phthalic and maleic acids, especially alkyl, cycloalkyl, or aryl esters of phthalic acid, and ethers of the formula 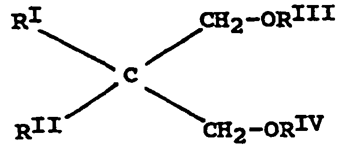 where R^{I}, R^{II}, same or different from each other, are alkyl, cycloalkyl or aryl radicals with 1-18 carbon atoms; R^{III} and R^{IV}, same or different, are alkyl radicals with 1-4 carbon atoms.

Ethers of this type are described in EP-A-344 755.

Examples representing said compounds are n-butyl phthalate, diisobutyl phthalate, di-n-octyl phthalate, 2-methyl-2-isopropyl-1,3-dimethoxypropane; 2-methyl-2-isobutyl-1,3-dimethoxypropane,2,2-diisobutyl-1,3-dimethoxypropane, 2-isopropyl-2-isopentyl-1,3-dimethoxypropane.

The internal donor is generally present in molar ratios with respect to Mg of 1:8-1:14. The titanium compound expressed as Ti is present in a percentage between 0.5 and 10% by weight.

Al-alkyl compounds selected particularly among Al-trialkyls, such as Al-triethyl, Al-triisobutyl and Al-tri-n-butyl, are used as co-catalysts.

The Al/Ti ratio is greater than 1 and is generally between 20-800.

In case of stereoregular polymerization of alpha olefins such as propylene and 1-butene, besides the Al-alkyl compound, usually, also an electron-donor compound (external donor is used). This compound may be the same as or different from the electron-donor compound present as internal donor.

When the internal donor is an ester of a polycarboxylic acid, especially a phthalate, more especially an alkyl, cycloalkyl or aryl ester of phthalic acid, the external donor is preferably selected among the silicon compounds of the formula R₁R₂Si(OR)₂, where R₁ and R₂ are alkyl, cycloalkyl or aryl radicals with 1-18 carbon atoms, and R is an alkyl radical with 1-4 carbon atoms. Examples representing these silanes are methyl cyclohexyl dimethoxysilane, diphenyl dimethoxysilane, methyl-t.butyl dimethoxysilane.

1,3-diethers with the formula previously shown may also be used advantageously as external donor.

If the internal donor is one of these diethers, there is no need to use an external donor, since the stereospecifity of the catalyst is in itself sufficiently high.

Catalysts containing an internal donor are used in the preparation of LLDPE with restricted molecular weight distribution. As already indicated, the catalysts are used in the polymerization of CH₂=CHR olefins where R is a hydrogen, or an alkyl or aryl radical with 1-8 carbon atoms, and mixtures of said olefins with or without a diene.

The polymerization is done according to known methods operating in liquid phase, in the presence or absence of an inert hydrocarbon diluent, or in gaseous phase.

It is also possible to use liquid-gas mixed processes where in one or more stages the polymerization is carried out in liquid phase, and in one or more successive stages it is carried out in gaseous phase.

The polymerization temperatures are in general between 20° and 150°C, preferably between 60° and 90°C. The operation takes place at atmospheric pressure or higher.

The data shown in examples and text relative to the following properties have been determined according to the methods indicated below.

| Property | Method |
|---|---|
| - MIL flow index | ASTM-D 1238 |
| - MIE " " | ASTM-D 1238 |
| - MIF " " | ASTM-D 1238 |
| - Fraction soluble in xylene | (see Determination before Examples) |
| - Isotacticity Index (I.I.) | Weight percentage of polymer insoluble in xylene at 25°C. Basically it conforms |
| | with the weight percentage of polymer insoluble in boiling n-heptane) |
| - Surface area | B.E.T. (apparatus used SORPTOMATIC 1800 - C. Erba). |
| - Porosity | Unless otherwise indicated, the porosity is determined with the B.E.T. method (see above). It is calculated from the integral pore distribution curve in function of the pores themselves. |
| - Porosity (mercury) | Determined by immersing a known quantity of the sample in a known quantity of mercury inside a dilatometer |
| | and gradually hydraulically increasing the pressure of the mercury. The pressure of introduction of the mercury in the pores is in function of the diameter of same. The measurement is done using a porosimeter "Porosimeter 2000 Series" (C. Erba). The total porosity is calculated from the volume decrease of the mercury and the values of the pressure applied. |
| - Bulk density | DIN-53194 |
| - Flowability | The time taken by 100 g of polymer to flow |
| | through a funnel with an output hole of a diameter of 1.25 cm, and walls with an inclination of 20° on the vertical. |
| - Morphology | ASTM-D 1921-63 |

### Determination of percentage in soluble xylene

2 g of polymer are dissolved in 250 ml of xylene at 135°C while agitating. After 20 minutes the solution is left to cool, still under agitation, until it reaches 25°C.

After 30 minutes the precipitated material is filtered through filter paper; the solution is evaporated in nitrogen current and the residue is dried under vacuum at 80°C until it reaches constant weight.

Thus the percentage of polymer soluble in xylene at room temperature is calculated.

### EXAMPLES

### PREPARATION OF MgCl₂/ALCOHOL ADDUCTS.

The MgCl₂/alcohol adducts in spherical particle form are prepared following the method described in example 2 of USP n. 4,399,054, but operating at 3,000 RPM instead of 10,000 RPM.

The adduct was partially dealcoholated by heat at increasing temperatures from 30°C to 180°C operating in nitrogen current.

### PREPARATION OF THE SOLID CATALYST COMPONENT.

In a 1 litre flask equipped with a condenser and mechanical agitator were introduced, under a nitrogen current, 625 ml of TiCl₄. At 0°C while agitating were added 25 g of partially dealcoholated adduct. It was then heated up to 100°C in 1 hour, when the temperature reaches 40°C diisobutylphthalate (DIBF) was added in molar ratio Mg/DIBF=8.

The temperature was maintained at 100°C for 2 hours, it was then left to decant and afterwards the hot liquid was syphoned off. 550 ml of TiCl₄ were added and it was heated to 120°C for 1 hour. Finally it was left to settle and the liquid was syphoned off while hot; the residual solid was washed 6 times with 200 ml aliquote of anhydrous hexane at 60°C and 3 times at room temperature.

The solid was then dried under vacuum.

### POLYMERIZATION OF PROPYLENE

In a 4 l stainless steel autoclave equipped with an agitator and a thermostatic system, which had been degassed with nitrogen at 70°C for 1 hour and then with propylene, was introduced at 30°C without agitation but under light propylene flow, the catalytic system consisting of a suspension of the above solid catalyst component in 80 ml of hexane, 0.76 g of Al-triethyl and 8.1 mg of diphenyldimethoxysilane (DPMS). The suspension was prepared immediately prior to the test.

The autoclave was then closed and 1 Nl of H₂ was introduced. While agitating 1.2 kg of liquid propylene were charged and the temperature was brought to 70°C in five minutes, maintaining the value constant for 2 hours.

At the end of the test, the agitation was stopped and any unreacted propylene was removed. Once the autoclave was cooled to room temperature, the polymer was recovered and then dried at 70°C under nitrogen current in oven for 3 hours and then analyzed.

### COPOLYMERIZATION OF ETHYLENE WITH BUTENE-1 (LLDPE)

The autoclave described above was degassed with propane instead of propylene. The catalytic system consisting of 25 cc of hexane, 1.05 g of Al-triisobutyl and the above catalyst component, was introduced in the autoclave at room temperature under light propane flow. The pressure was increased to 5.5 bar (5.5 atm) with H₂ and then to 2 bar (2 atm) with ethylene, prepolymerizing the ethylene until 15 g of ethylene were used (45°C).

The propane and the hydrogen were degassed and after washing with H₂ the gaseous phase was formed with 37.0 g of ethylene, 31.9 g of butene-1, and 1.8 bar (1.8 atm) of H₂ (total pressure 15 bar (15 atm)).

An ethylene-butene-1 mixture was then fed in a weight ratio of 9:1 at 70°C for 2 hours

At the end the autoclave was degassed and cooled rapidly to room temperature.

The recovered copolymer was dried at 70°C in nitrogen for 4 hours in an oven.

### POLYMERIZATION OF ETHYLENE

A 2.5 l stainless steel autoclave equipped with agitator and thermostatic system was flushed as described above for the test with propylene but using ethylene instead of propylene.

At 45°C were introduced in H₂ current, 900 ml of a solution containing 0.5 g/l of Al-triisobutyl in anhydrous hexane and immediately afterwards, the catalyst component suspended in 100 ml of the above mentioned solution.

The temperature was rapidly brought to 70°C and H₂ was fed until the pressure reached 3 bar (3 atm.), then ethylene up to 10.5 bar (10.5 atm.). These conditions were maintained for 3 hours replenishing continuously the ethylene depleted. At the end of the polymerization reaction, the autoclave was rapidly vented and cooled at room temperature.

The polymeric suspension was filtered and the solid residue dried in nitrogen at 60°C for 8 hours.

### Example 1

A spherical MgCl₂.3EtOH adduct (obtained as indicated in the general method) was dealcoholated until an EtOH/MgCl₂ molar ratio of 1.7 was obtained.

A product with the following characteristics was obtained:
- porosity (mercury) = 0.904 cc/g;
- surface area = 9.2 m²/g;
- bulk density = 0.607 g/cc.

From this adduct, through the TiCl₄ treatment described in the general method, a solid catalyst component in spherical form was obtained with the following characteristics:
- Ti = 2.5% by weight;
- DIBF = 8.2% by weight;
- porosity = 0.405 cc/g;
- surface area = 249 m²/g;
- bulk density = 0.554 g/cc.

The X-ray spectrum of this component did not have reflections at 2 ϑ of 14.95°; a halo with a maximum intensity of 2 ϑ of 34.72° was present instead.

This catalyst component was used in the polymerization of propylene following the technique described in the general section. Using 0.01 g of component 430 g of polymer were obtained with the following characteristics:
- fraction soluble in xylene at 25°C = 2.4%;
- MIL = 2.5 g/10';
- bulk density = 0.48 g/cc;
- morphology: 100% spherical particles with diameter between 1000 and 5000 µm ;
- flowability: 10 sec.

### Example 2

By partially dealcoholating (according to example 1) a MgCl₂.3EtOH spherical adduct also obtained according to the method indicated in example 1, an adduct was prepared with an EtOH/MgCl₂ molar ratio of 1.5, and with the following characteristics:
- porosity (mercury) = 0.946 cc/g;
- surface area = 9.1 m²/g;
- bulk density = 0.564 g/cc.

From this adduct, through TiCl₄ treatment as indicated above, a spherical catalyst component was prepared with the following characteristics:
- Ti = 2.5% weight;
- DIBF = 8.0% weight;
- porosity = 0.389 cc/g;
- surface area = 221 m²/g;
- bulk density = 0.555 g/cc.

The X-ray spectrum of the component did not show reflections at 2 ϑ of 14.95°; only a halo was present with a maximum intensity at 2 ϑ of 2.5780°.

This catalyst component was used in the polymerization of the propylene using the procedure of example 1.

Using 0.015 g of catalyst component, 378 g of polypropylene were obtained with the following characteristics:
- fraction soluble in xylene at 25°C = 2.6%;
- MIL - 2.8 g/10';
- bulk density = 0.395 g/cc;
- morphology = 100% spherical particles with diameter between 1000 and 5000 µm;
- flowability - 12 sec.

### Example 3

By partially dealcoholating (according to example 1) a MgCl₂.3EtOH spherical adduct obtained according to the method indicated in the preceding examples, an EtOH/MgCl₂ = 1 adduct was obtained which has the following characteristics:
- porosity (mercury) = 1.208 cc/g;
- surface area = 11.5 m²/g;
- bulk density = 0.535 g/cc.

From said adduct, through TiCl₄ reaction, following the methodology described in the preceding examples, was obtained a spherical catalytic component with the following characteristics:
- Ti = 2.2% weight;
- DIBF = 6.8% weight;
- porosity = 0.261 cc/g;
- surface area = 66.5 m²/g;
- apparent density = 0.440 g/cc.

The X-ray spectrum of the catalytic component showed a reflection at 2 ϑ of 14.95° as well as one at 2 ϑ = 35°.

Using 0.023 g of the catalyst component in the propylene polymerization using the conditions in example 1, 412 g of polypropylene were obtained with the following characteristics:
- fraction soluble in xylene at room temperature = 3.0%;
- MIL - 3.2 g/10';
- bulk density = 0.35 g/cc;
- morphology = 100% spherical particles with diameter between 500 and 5000 µm ;
- flowability - 12 sec.

Following the previous general description of the procedure for the copolymerization of ethylene with butene, 0.0238 g of catalyst component were used and 240 g of copolymer was obtained with the following characteristics:
- linked butene = 8.3% weight;
- fraction soluble in xylene at room temperature = 12.2%;
- MIE = 12 g/10';
- MIF = 12 g/10';
- MIF/MIE = 30;
- morphology = 100% spherical particles with diameter between 500 and 5000 µm.

### Example 4

By partially dealcoholating (according to example 1) a MgCl₂.3EtOH spherical adduct obtained according to the method indicated in the preceding examples, an EtOH/Mg = 0.4 adduct was obtained which had the following characteristics:
- porosity (mercury) = 1.604 cc/g;
- surface area = 36.3 m²/g;
- apparent density = 0.410 g/cc.

By treating this support with TiCl₄ at a temperature of 135°C, at a concentration of 50 g/l, with three 1 hour treatments, a spherical catalyst component was obtained which, after the elimination of the excess TiCl₄, washing and drying, had the following characteristics:
- Ti = 2.6% weight;
- porosity = 0.427 cc/g;
- surface area 66.5 m²/g.

The X-ray spectrum of this component showed a reflection at 2 ϑ of 14.95° as well as at 2 ϑ of 35°.

Using 0.012 g of catalyst component in the polymerization of ethylene according to the method described in the general section, 400 g of polyethylene were obtained with the following characteristics:
- MIE = 0.144 g/10';
- MIF = 8.87 g/10';
- MIF/MIE = 61.6
- morphology = 100% spherical particles with diameter between 1000 and 5000 µm ;
- flowability = 12 sec.;
- apparent density = 0.38 g/cc.

### Example 5

By partially dealcoholating (as per example 1) a MgCl₂.3EtOH spherical adduct obtained according to the method indicated in the preceding examples, an adduct was obtained with EtOH/MgCl₂ molar ratio of 0.15 with the following characteristics:
- porosity (mercury) = 1.613 cc/g;
- surface area = 22.2 m²/g.

The X-ray spectrum of this component showed a reflection at 2 ϑ of 14.95° as well as 2 ϑ of 35°.

Using 0.03 g of this component in the polymerization of ethylene, as described in example 4, 380 g of polyethylene were obtained with the following characteristics:
- MIE = 0.205 g/10';
- MIF = 16.42 g/10';
- MIF/MIE = 80.1;
- flowability = 12 sec.;
- bulk density = 0.40 g/cc.

### Example 6

A MgCl₂.lEtOH adduct was prepared according to the method in example 3, but using also a quantity of water diluted in the alcohol used for the preparation of the starting MgCl₂.3EtOH equal to 2% in weight.

The adduct after dealcoholation contained 3% in weight of water. With said adduct, after treatment with TiCl₄ and DIBF as described in example 1, a spherical catalyst component was obtained with the following weight composition:
- Ti = 2.35%;
- DIBF = 6.9%.

Using 0.025 g of this component in the polymerization of propylene as per example 1, 410 g of polymer in spherical particle form were obtained which had the following characteristics:
- fraction soluble in xylene at 25°C = 3.1%;
- MIL = 3.0 10';
- apparent density = 0.35 g/cc;
- morphology = 100% of the spherical particles having a diameter between 100 and 5000 µm;
- flowability = 13 sec.

## Claims

1. Process for the polymerization of olefins carried out in the presence of a catalyst comprising the product of the reaction of an Al-trialkyl compound and a catalyst component comprising a titanium compound containing at least one Ti-halogen link supported on anhydrous magnesium chloride, said component being in the form of spherical particles with an average diameter between 10 and 350 µm, surface area between 20 and 250 m²/g, porosity greater than 0.2 cc/g, having an X-ray spectrum where a) reflections at angle 2 ϑ of 35° and 2 ϑ of 14.95° are present, or b) where the reflection at 2 ϑ angle of 35° is no longer present but is substituted by a halo with a maximum intensity between angles 2 ϑ of 33.5° and 35°, and the reflection at angle 2 ϑ of 14.95° is not present.

2. The process of claim 1 where an electron-donor compound (external donor) is used in the preparation of the catalyst.

3. The process of claim 2, where the catalyst component includes an electron-donor selected among alkyl, cycloalkyl and aryl esters of phthalic acid, and the external donor is selected among silicon compounds of the formula R₁R₂Si(OR)₂, where R₁ and R₂ equal or different are alkyl, cycloalkyl or aryl radicals with 1-18 carbon atoms, and R is an alkyl radical with 1-4 carbon atoms.

4. The process of claim 2, where the external donor is selected among 1,3-diethers of the formula 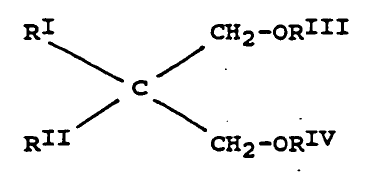 where R^{I}, R^{II}, same or different from each other, are alkyl, cycloalkyl or aryl radicals with 1-18 carbon atoms; and R^{III} and R^{IV}, same or different, are alkyl radicals with 1-4 carbon atoms.

## Patentansprüche

1. Verfahren zur Polymerisation von Olefinen in Gegenwart eines Katalysators, der das Produkt der Reaktion einer Aluminiumtrialkylverbindung und einer eine auf wasserfreiem Magnesiumchlorid geträgerte Titanverbindung mit mindestens einer Ti-Halogen-Bindung enthaltenden Katalysatorkomponente, welche in Form von kugelförmigen Teilchen mit einem mittleren Durchmesser zwischen 10 und 350 µm, einer Oberfläche zwischen 20 und 250 m²/g, einer Porosität von mehr als 0,2 cm³/g und einem Röntgenspektrum, in dem a) Reflexe im Winkel 2ϑ von 35° und 2ϑ von 14,95° vorliegen oder b) der Reflex im Winkel von 2ϑ von 35° nicht mehr vorhanden ist, sondern durch ein Halo mit einer maximalen Intensität zwischen den Winkeln 2ϑ von 33,5° und 35° ersetzt ist, und der Reflex im Winkel 2ϑ von 14,95° nicht vorhanden ist, vorliegt, umfaßt.

2. Verfahren nach Anspruch 1, bei dem man bei der Herstellung des Katalysators eine Elektronendonatorverbindung (externer Donator) verwendet.

3. Verfahren nach Anspruch 2, bei dem die Katalysatorkomponente einen unter Alkyl-, Cycloalkyl- und Arylestern von Phthalsäure ausgewählten Elektronendonator enthält und der externe Donator unter Siliciumverbindungen der Formel R₁R₂Si(OR)₂, worin R₁ und R₂ gleich oder verschieden sind und für Alkyl-, Cycloalkyl- oder Arylreste mit 1-18 Kohlenstoffatomen stehen und R für einen Alkylrest mit 1-4 Kohlenstoffatomen steht, ausgewählt wird.

4. Verfahren nach Anspruch 2, bei dem man den externen Donator unter 1,3-Diethern der Formel 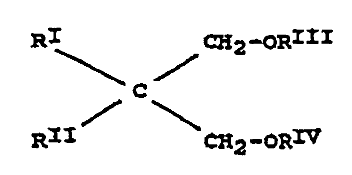 worin R^{I} und R^{II} gleich oder voneinander verschieden sind und für Alkyl-, Cycloalkyl- oder Arylreste mit 1-18 Kohlenstoffatomen stehen und R^{III} und R^{IV} gleich oder verschieden sind und für Alkylreste mit 1-4 Kohlenstoffatomen stehen, auswählt.

## Revendications

1. Procédé pour la polymérisation d'oléfines mis en oeuvre en présence d'un catalyseur comprenant le produit de réaction entre un composé Al-trialkyle et un composant catalytique comprenant un composé de titane contenant au moins une liaison Ti-halogène supporté sur chlorure de magnésium anhydre, ledit composant étant sous la forme de particules sphériques présentant un diamètre moyen compris entre 10 et 350 µm, une aire superficielle comprise entre 20 et 250 m²/g, une porosité supérieure à 0,2 cm³/g, ledit composant présentant un spectre de rayons X qui comporte :
a) des réflexions à angle 2 θ à 35° et 14,95 ° ou
b) ne présente pas de réflexion pour l'angle 2 θ de 35° mais est substituée par un halo présentant une intensité maximum comprise entre des angles 2 θ de 33,5 ° et 35°, et l'angle de réflexion à 2 θ de 14,95+ étant absent.

2. Le procédé selon la revendication 1, dans lequel un composé électro-donneur (donneur externe) est utilisé dans la préparation d'un catalyseur.

3. Le procédé selon la revendication 2, dans lequel le composant catalytique inclut un électro-donneur choisi parmi les esters d'alkyle, de cycloalkyle et d'aryle de l'acide phtalique et le donneur externe est choisi parmi les composés de silicone de formule R₁R₂Si(OR)₂, dans laquelle R₁ et R₂ identiques ou différents sont des radicaux alkyle, cycloalkyle ou aryle comprenant de 1 à 18 atomes de carbone, et R est un radical alkyle comprenant de 1 à 4 atomes de carbone.

4. Le procédé selon la revendication 2, dans lequel le donneur externe est choisi dans le groupe comprenant les 1,3-diéthers de la formule : 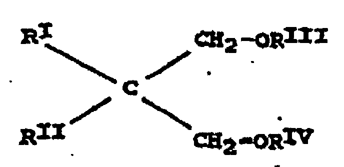 dans laquelle R^{I}, R^{II}, identiques ou différents l'un de l'autre, sont des radicaux alkyle, cycloalkyle ou aryle comprenant de 1 à 18 atomes de carbone, et R^{III} et R^{IV}, identiques ou différents, sont des radicaux alkyle comprenant de 1 à 4 atomes de carbone.
